# EUROPÄISCHE PATENTSCHRIFT

(11) **EP 2 017 653 B1**
(45) Veröffentlichungstag und Bekanntmachung des Hinweises auf die Patenterteilung: **18.11.2009**
(21) Anmeldenummer: 08105671.5
(22) Anmeldetag: 26.01.2007
(51) Int. Cl.: G01V 8/20

(54) **Optoelektronischer Sensor und Empfangsverfahren mit Störlichtkorrektur**
Optoelectronic sensor and reception method with correction of light interference or stray light
Capteur optoélectronique et procédé de réception doté d'un correcteur de lumière parasite

(43) Veröffentlichungstag der Anmeldung: 21.01.2009
(62) Teilanmeldung aus: 07001707.4
(73) Patentinhaber: SICK AG, 79183 Waldkirch (DE)
(72) Erfinder: Blöhbaum, Frank, 79112, Freiburg (DE)
(74) Vertreter: Hehl, Ulrich

(56) Entgegenhaltungen:
- EP-A- 1 146 353
- EP-A- 1 512 992
- CH-A5- 693 046
- DE-A1- 10 061 649
- DE-A1- 10 231 178
- DE-A1- 19 753 836
- DE-C1- 3 311 578
- DE-U1- 29 924 385

## Beschreibung

Die Erfindung betrifft einen optoelektronischen Sensor und ein Empfangsverfahren nach den Oberbegriffen von Anspruch 1 bzw. 11.

Eine große Familie optoelektronischer Sensoren beruht auf dem Prinzip, von einer Lichtquelle ausgesandtes Licht in einem Lichtempfänger zu detektieren. Beispiele solcher Sensoren in der Automatisierung- und Sicherheitstechnik sind Lichtgitter und (Reflexions-)Lichtschranken. Diese müssen auch unter rauen industriellen Bedingungen zuverlässig funktionieren.

Dies ist oft nicht ohne weiteres zu erreichen, weil optische Störstrahlung aus verschiedensten Quellen auftritt. Zu solchen Quellen zählt das Sonnenlicht, Glühlampen, Blitzlampen, Schweißfunken oder das Licht anderer optoelektronischer Sensoren. Die optische Störstrahlungsstärke kann einen Bereich von mehreren, typischerweise bis zu sechs Dekaden überstreichen.

Die Unterdrückung der optischen Störstrahlung kann optisch, elektronisch oder mit einer Kombination aus optischen und elektronischen Mitteln erfolgen. Eine Möglichkeit ist der Einsatz von optischen Bandfiltern etwa mittels dünner Schichten auf der Empfangsoptik, die auf die optische Sendewellenlänge der Lichtquelle abgestimmt sind. Die Störstrahlungsstärke kann aber bis zu sechs Dekaden höhere Werte als das eigentliche Signal annehmen. Mit optischen Bandpassfiltem kann eine Reduktion der optischen Störstrahlung bei weitem nicht das erforderliche Maß erreichen.

Sehr schmalbandige optische Filter sind zudem teuer, und das Schichtsystem ist empfindlich gegenüber Kratzern, Feuchtigkeit oder Verschmutzung.

Eine andere Möglichkeit ist, elektronisch schmalbandige Signale auszusenden und das Empfangssignal mit einem entsprechend angepassten elektronischen Bandpassfilter zu filtern. Dann muss aber die untere Frequenzgrenze des Bandpassfilters relativ hoch gewählt werden, um noch eine ausreichende Dämpfungsfunktion zu gewährleisten. Da breitbandige Störstrahler, wie Lampen mit elektronisch getakteten Vorschaltgeräten, sich zunehmend verbreiten, werden die unerwünschten Störsignale dennoch ungenügend gedämpft. Wegen der notwendigen Schmalbandigkeit des elektronischen Bandpassfilters werden Nutzsignale höherer Bandbreite erheblich verzerrt. Signalkodierungen mit einem hohen Zeit-Bandbreiteprodukt, deren Einsatz für viele Anwendungen wünschenswert ist, können dann nicht eingesetzt werden.

Aus der DE 199 07 548 C2 ist eine optoelektronische Vorrichtung mit einem zweiteiligen Lichtempfänger bekannt, wobei der eine Lichtempfänger ringförmig um den anderen angeordnet ist. Durch den ringförmigen Lichtempfänger kann die Vorrichtung erkennen, ob ein Signal zentriert auftrifft und somit die Vorrichtung richtig justiert ist. Eine Abweichung zeigt sie an, damit nachjustiert werden kann. Eher beiläufig ist in den abschließenden Absätzen erwähnt, dass Licht im Ringbereich Störlicht, im Inneren dagegen Nutzlicht ist. Wird daher im Betrieb ein Schwellwert des Verhältnisses der beiden Signale im Ringbereich und im Inneren zueinander dauerhaft überschritten, so wird eine Dejustierung angenommen. Eine nur sporadische Überschreitung wird als von Störlicht verursacht angenommen und daraufhin die Sendefrequenz oder die digitale Filterung geändert. Eine Veränderung der Sendefrequenz ändert an den Intensitäten nichts, wenn nicht zusätzlich ein Bandpassfilter eingesetzt wird. Digitale Filterung ist in diesem Zusammenhang auch nur als Bandpassfilterung zu verstehen. Damit werden aber die oben beschriebenen Probleme gerade nicht vermieden.

Die DE 198 50 270 A1 offenbart einen triangulierenden Distanzsensor, bei dem das Nutzsignal als Hauptmaximum auf dem ortsauflösenden Empfänger gesucht wird. Dazu werden etwaige durch Störlicht verursachte Nebenmaxima als Grundrauschpegel abgeschnitten. Dieses Verfahren kann aber nur funktionieren, wenn das Nutzsignal größer ist als das Störsignal. Diese Situation wäre allenfalls nach Einsatz von Bandpassfiltern oder in einem beschränkten Anwendungsfeld zu erreichen, bei dem wenig Störungen vorhanden sind. In einer alternativen Ausführungsform wird das Sendelicht jeweils kurz ausgeschaltet, um ein Referenzrauschen aufzunehmen. Das ist bei variierender Beleuchtung oder schnellen Objekten unzuverlässig.

Aus der EP 1 114 355 B1 ist die Verwendung eines diffraktiven optischen Elements im optischen Pfad eines Bildaufnahmegerätes zu entnehmen. Es dient dort aber nicht zu einer eigentlichen Verbesserung des Empfangs eines Nutzlichtsignals, um dieses gegenüber einem Störlichtsignal besser zu erkennen, sondern zu einer Korrektur der chromatischen Aberration.

Die EP 1 146 353 A2 offenbart ein Verfahren zum Betreiben einer optoelektronischen Sensoranordnung. Dabei erfasst ein Bildsensor einen Überwachungsbereich, der mit einer punktierten Linie beleuchtet wird. Die Lichtpunkte werden entweder mit einer gepulsten Lichtquelle, die über ein Polygonspiegelrad abgelenkt wird, oder mittels eines diffraktiven optischen Elements erzeugt.

Aus der DE 102 31 178 A1 ist ein optoelektronischer Sensor bekannt, der eine Vielzahl von Empfangselementen aufweist, die mehrstufig von mehreren Verarbeitungseinheiten ausgelesen werden. In einem Einlernbetrieb kann die Lage eines Empfangslichtflecks bestimmt und nur denjenigen Empfangselementen eine Verarbeitungseinheit zugeordnet werden, welche von Empfangslicht getroffen sind.

Es ist daher Aufgabe der Erfindung, ein optoelektronisches System zum Empfang von Sendelicht anzugeben, welches Störstrahlung zuverlässig unterdrückt.

Diese Aufgabe wird durch einen optoelektronischen Sensor gemäß Anspruch 1 beziehungsweise ein Empfangsverfahren gemäß Anspruch 11 gelöst. Die erfindungsgemäße Lösung ermöglicht, auf einen Bandpassfilter zu verzichten. Es können auch breitbandige optische Störstrahlungsquellen hoher Intensität selbst dann noch effektiv unterdrückt werden, wenn sich die Frequenzbereiche von Nutz- und Störsignale überlappen. Die Unterdrückung erfolgt unmittelbar im allerersten Verarbeitungsschritt (elektrotechnisch "direkt an der Antenne"), es werden damit keine erhöhten Anforderungen an den Dynamikbereich eingesetzter Verstärker gestellt. Das Nutzsignal wird auch dann noch erkannt, wenn die gesamte Intensität des Störsignals erheblich größer ist. Da keine elektronischen Filter benutzt werden, kann die Signalform des Nutzsignals in weiten Grenzen gewählt werden. Es können so beispielsweise auch Pulsfolgen mit einem hohen Zeit-Bandbreiteprodukt übertragen werden, ohne die Kurvenform zu verzerren.

Die Erfindung geht dabei von dem Lösüngsprinzip aus, das Nutzlicht gezielt auf einen eigenen Bereich eines Lichtempfängers zu führen. Da dieser Bereich bekannt ist oder eingelernt wird, kann mit anderen Bereichen eines Lichtempfängers verglichen werden, den nur das Störlicht trifft. Auf eine Filterung kann dann verzichtet werden.

Das optische Element ist ein diffraktives optisches Element und erlaubt elegant, das Nutzlicht auf einen eigenen Pfad zu lenken. Es lässt sich außerdem mittels Heißprägen von Polymeren extrem kostengünstig realisieren.

Dabei bildet bevorzugt das diffraktive optische Element das Nutzlicht in einem Muster, insbesondere einem Spot, einer Matrixanordnung, einer Vielzahl von Spots oder einem Streifenmuster ab. Das ermöglicht, mit einem Nutzlichtempfänger der dem Muster angepassten Form, anwendungsspezifische Lösungen zu entwickeln.

Alternativ ist das optische Element eine hintereinander angeordnete Kombination aus einer Linse und einem diffraktiven optischen Element. Die Linse kann hierbei helfen, Abbildungsfehler oder zu große Sichtwinkel des diffraktiven optischen Elements auszugleichen.

In einer besonderen Ausführungsform kann der erste Lichtsender oder ein zweiter Lichtsender Nutzlicht eines zweiten vorgegebenen optischen Frequenzbereichs aussenden, der Nutzlichtempfänger weist einen ersten Bipolarsignal-Empfangsbereich und einen zweiten Bipolarsignal-Empfangsbereich auf, das diffraktive optische Element ist dafür ausgebildet, einfallendes Nutzlicht des ersten Frequenzbereichs auf den ersten Empfangsbereich und einfallendes Nutzlicht des zweiten Frequenzbereichs auf den zweiten Empfangsbereich zu leiten, und somit liefern der erste Empfangsbereich und der zweite Empfangsbereich durch entsprechende Bewertung ihrer Ausgangssignale ein bipolares Überlagerungssignal. Das bipolare Signal kann auf zumindest zwei Weisen für eine Erhöhung der Sicherheit und Geschwindigkeit verwendet werden, mit der eine Kodierung der Signalfolge in dem Nutzlichtsignal empfangen werden kann. So kann ein positiv bewertetes Signal mit einem negativ bewerteten Signal alternieren (also eine Codierung des Signals etwa mit +1 und -1), wobei dann das negativ bewertete Signal sicherer erkannt wird als ein unipolares Signal, bei dem sich Signal und Signalpause abwechseln (also eine Codierung mit +1 und 0). Alternativ können zwei Lichtsender gleichzeitig aktiv sein, um ein differentielles Signal zu erzeugen. Durch das negativ bewertete Signal können zudem Entladungsvorgänge in Kondensatoren der Empfangs- und Auswertungsschaltung beschleunigt werden.

Erfindungsgemäß ist eine Vielzahl von lichtempfangenden Pixelelementen vorgesehen, insbesondere als Zeile oder Matrix angeordnet, und eine erste Teilmenge der Vielzahl bildet den Nutzlichtempfänger und eine hierzu disjunkte zweite Teilmenge der Vielzahl den Störlichtempfänger. Somit können bekannte CCD- oder CMOS-Empfänger eingesetzt und die Größe und Geometrie der Lichtempfänger durch Auswahl entsprechender Pixelelemente vorgegeben werden.

Dabei ist erfindungsgemäß eine Einlerneinheit vorgesehen, welche in einem Einlernmodus Nutzlicht empfangende Pixelelemente erkennen kann und durch Zusammenfassen dieser Pixelelemente die erste Teilmenge festlegt, die den Nutzlichtempfänger bildet. Dieser Einlernmodus erleichtert die Justierung erheblich. Es kommt nämlich nicht mehr darauf an, den Lichtempfänger ganz genau auszurichten, sondern nur noch darauf, überhaupt die Matrix der Pixelelemente zu treffen. Die Feinjustierung innerhalb der Matrix kann dann elektronisch vorgenommen werden, ohne dass der Bediener noch einschreiten muss.

Bevorzugt ist der Einlernmodus weiter dafür ausgebildet, die zweite Teilmenge im Einlernmodus durch Nachbarschaft zu den Nutzlicht empfangenden Pixelelementen festzulegen. Damit wird ein Störlichtempfänger festgelegt, wobei die Quelle des empfangenen Störlichtes wegen der engen Nachbarschaft nah bei dem Lichtsender liegt. Eine Kompensationen des Überlagerungssignals mit dem dort auftreffenden Störlicht ist besonders genau.

Vorteilhafterweise sind die Pixelelemente der ersten Teilmenge untereinander und die Pixelelemente der zweiten Teilmenge untereinander parallel geschaltet, um den Nutzlichtempfänger beziehungsweise den Störlichtempfänger zu bilden. Dies ist eine einfache schaltungstechnische Lösung, um Pixelelemente zu verbinden und dadurch den Nutzlichtempfänger und den Störlichtempfänger auszubilden.

Bevorzugt ist die Zahl der Elemente der ersten Teilmenge und der zweiten Teilmenge gleich. Damit können Überlagerungssignal und Störlichtsignal ohne gegenseitige Skalierung miteinander verglichen werden. Dies ermöglicht eine besonders einfache Auswertungsschaltung, die somit ihrerseits weniger eigene Signalverzerrungen verursacht.

Bevorzugt weist die erste Teilmenge eine erste Untermenge als ersten Bipolar-Empfangsbereich und eine zweite Untermenge als zweiten Bipolar-Empfangsbereich auf. Auf diese Weise ist es möglich, die vereinfachte Justierung mittels Einlernen von Bereichen von Pixelempfangselementen auch für das bipolare Signal auszunutzen.

Bevorzugt ist die Größe und/oder die Anordnung der Pixelelemente an das von dem diffraktiven optischen Element erzeugte Muster angepasst. In diesem Fall kann der Nutzlichtempfänger besonders gut dem Muster entsprechend ausgebildet werden.

Vorteilhafterweise sind der Nutzlichtempfänger und der Störlichtempfänger antiparallel geschaltet. Damit kompensiert sich das Störlichtsignal bei einer Zusammenführung teilweise, bei gleich großen Lichtempfängern sogar beinahe gänzlich.

Vorteilhafterweise ist ein Verstärker mit zwei getrennten Stromeingängen mit den Lichtempfängern verbunden, um das Überlagerungssignal und das Störlichtsignal auszuwerten. Damit können die Signale der Lichtempfänger direkt ausgewertet werden.

Alternativ ist ein Strom-/Spannungswandler vorgesehen, der dafür ausgebildet ist, Photoströme der Lichtempfänger einem Verstärker zuzuführen, insbesondere einem Differenzverstärker. Damit kann das Nutzlichtsignal durch einen Spannungsvergleich in üblichen elektronischen Bauteilen erhalten werden.

Bevorzugt ist je ein A/D-Wandler für die Digitalisierung des Überlagerungssignals und des Störungssignals vorgesehen. Nach der Digitalisierung kann die weitere Bewertung in einer Weise erfolgen, bei der weitere Signalverzerrungen keine Rolle mehr spielen.

Das Nutzlicht kann je nach Ausführungsform sichtbares, infrarotes oder ultraviolettes Licht sein. Dies hängt davon ab, ob man etwa zu Justierzwecken das Licht sehen möchte oder ob das optische Element mit der entsprechenden Wellenlänge überhaupt technisch zu realisieren ist.

In einer bevorzugten Ausführungsform ist der Sensor ein Lichtgitter oder eine Lichtschranke insbesondere des Reflexionstyps. Dies sind Sensoren, bei denen es auf ein sicheres Erkennen des Nutzlichtsignals in besonderer Weise ankommt, weil sie teilweise sehr große Entfernungen mit entsprechend geringen Signalstärken überdecken müssen, und weil ein Nichterkennen des Nutzlichtsignals zu einer Fehlfunktion führt, die teure Ausfallzeiten für Nachjustierungen oder Abschirmung von Störquellen erforderlich machen kann.

Das erfindungsgemäße Verfahren kann mit analogen Merkmalen fortgebildet werden, wie sie beispielhaft, aber nicht abschließend in den sich anschließenden Unteransprüchen angegeben sind, und zeigt dabei ähnliche Vorteile.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine erste Ausführungsform der Erfindung mit einem diffraktiven opti- schen Element und zwei untereinander angeordneten Lichtempfängern;
- Fig. 2: eine zweite Ausführungsform der Erfindung mit einer Linse und einem ringförmigen Lichtempfänger;
- Fig. 3: eine Kompensationsschaltung zur Unterdrückung des Störlichtsignals;
- Fig. 4: eine erläuternde Darstellung zu den Intensitätsverhältnissen im Nahbe- reich bei Verwendung einer Linse als optisches Element;
- Fig. 5: eine dreidimensionale Darstellung einer Ausführungsform der Erfindung mit Einlernen der Lichtempfänger zur vereinfachten Justierung;
- Fig. 6: eine Draufsicht auf die Ausführungsform gemäß Fig. 4;
- Fig. 7: eine dreidimensionale Darstellung einer weiteren Ausführungsform der Erfindung mit einem ein Muster erzeugenden diffraktiven optischen E- lement;
- Fig. 8: eine dreidimensionale Darstellung einer weiteren Ausführungsform der Erfindung zur Erzeugung eines bipolaren Signals;
- Fig. 9: eine Draufsicht auf die Ausführungsform gemäß Fig. 7; und
- Fig. 10: eine schematische Darstellung zur Erläuterung eines bipolaren gegen- über einem unipolaren Signals.

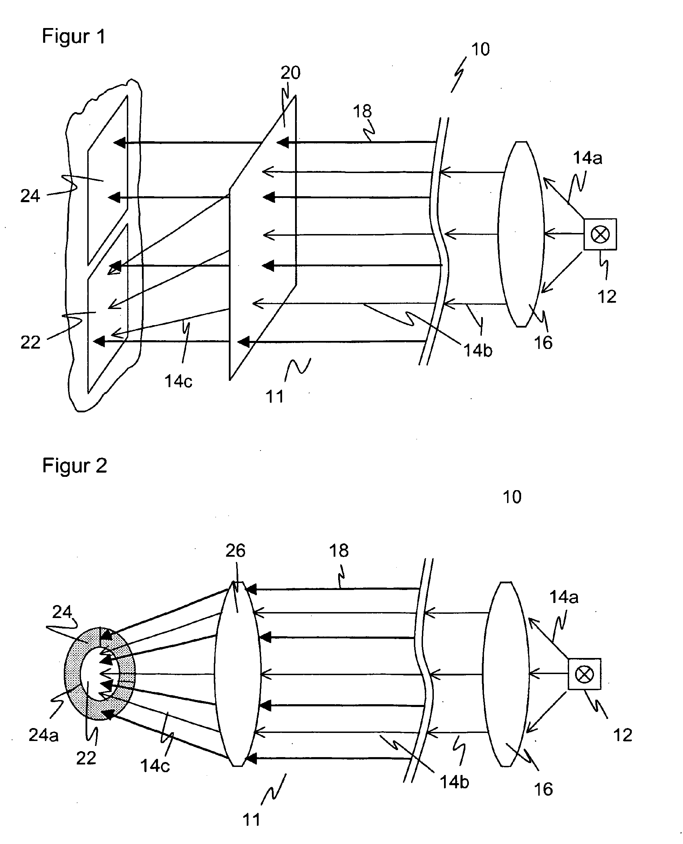

Figur 1 zeigt schematisch eine erste Ausführungsform des erfindungsgemäßen Sensors 10. Ein Lichtsender 12 strahlt Nutzlicht 14a einer vorgegebenen optischen Wellenlänge in einen Überwachungsbereich 11 ab. Die geschwungenen Linien deuten an, dass der Überwachungsbereich 11 deutlich größer ist als dargestellt. Der Lichtsender 12 ist vorzugsweise eine Halbleiterstrahlungsquelle mit definierter optischer Wellenlänge und geringer optischer Bandbreite, beispielsweise eine LED oder eine Laserdiode wie eine VCSEL oder eine Kantenemitter-Laserdiode. Dem Lichtsender 12 ist eine Linse 16 zugeordnet, die das Nutzlicht 14a zu einem Lichtstrahl 14b formt. Der Nutzlichtstrahl 14b fällt, nachdem er den Überwachungsbereich 11 überstrichen hat, gemeinsam mit Störlicht 18 auf ein diffraktives optisches Element 20. Das Störlicht 18 kann Umgebungslicht, beispielsweise Sonnenlicht oder Licht einer Beleuchtung sein, aber auch von Schweißfunken, Blitzlampen oder anderen optoelektronischen Sensoren stammen.

Das diffraktive optische Elemente 20 weist eine optische Mikrostruktur auf, die auf die Wellenlänge des Lichtsenders 12 abgestimmt ist. Die Bandbreite dieser Wellenlänge beträgt typischerweise 5-10nm. Grundsätzlich sind alle Wellenlängenbereiche des infraroten, sichtbaren und ultravioletten Spektrums denkbar, solange eine geeignete Lichtquelle erhältlich ist und die optische Mikrostruktur, entsprechend den nachstehend geforderten Eigenschaften, technisch ausgebildet werden kann. Die Mikrostruktur muss nur einmalig berechnet werden, um eine Urform ("Mutter") für die weitere Herstellung zu erzeugen. Anschließend ist es sehr leicht und extrem kostengünstig möglich, aus Kunststoffen zum Beispiel durch Heißprägen von Polymeren mithilfe der Urform das diffraktive optische Elemente 20 herzustellen.

Die Mikrostruktur des diffraktiven optischen Elements 20 lenkt selektiv Nutzlicht im Wellenlängenbereich des Lichtsenders 12 in eine bestimmte Richtung ab, so dass es auf einen Nutzlichtempfänger 22 trifft. Für jede andere optische Wellenlängen ist das diffraktive optische Element diffus, also nicht abbildend, transparent. Mit anderen Worten durchdringt Störlicht 18 das diffraktive optische Elemente 20, als sei es nicht vorhanden, es erfährt lediglich eine geringe Intensitätsabschwächung. Störlicht 18 trifft damit annähernd ungehindert gleichermaßen auf den Nutzlichtempfänger 22 wie auf einen über dem Nutzlichtempfänger 22 angeordneten Störlichtempfänger 24 und weitere Bereiche, die hier nicht näher betrachtet werden sollen.

Nutzlichtempfänger 22 und Störlichtempfänger 24 bilden also gemeinsam einen Lichtempfänger aus zwei gleichartigen Photodioden, die mechanisch eng beieinander angeordnet, elektronisch aber getrennt sind und die typischerweise auf einem gemeinsamen Chip mit denselben Prozessschritten hergestellt wurden, um eine gute Übereinstimmung der optoelektronischen Eigenschaften zu erreichen. Durch das zugeordnete diffraktive optische Elemente 20 wird der Nutzlichtempfänger 22 mit der Summe aus abgelenktem Nutzlicht 14c und Störlicht 18 beaufschlagt, der Störlichtempfänger 24 nur mit Störlicht 18, also Hintergrundlicht beziehungsweise optischer Störstrahlung.

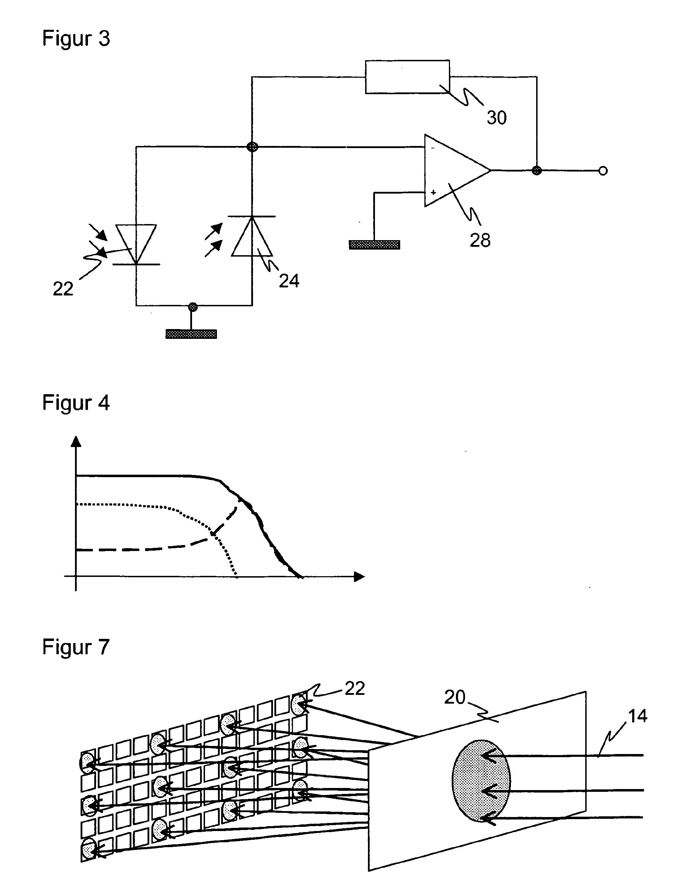

Der mit Störlicht überlagerte Lichtstrahl 14b ist also, wenn er auf den Empfänger 22, 24 auftrifft, durch das diffraktive optische Element 20 in einen Nutzkanal mit einem Überlagerungssignal aus abgelenktem Nutzlicht 14c und Störlicht 18 sowie einen Kompensationskanal nur mit Störlicht 18 aufgeteilt. Die Signale der Empfänger 22, 24 können dann zur Störlichtunterdrückung ausgewertet werden, wie weiter unten im Zusammenhang mit der Figur 3 noch näher erläutert wird.

Figur 2 zeigt eine zweite Ausführungsform des erfindungsgemäßen Sensors 10, wobei gleiche Bezugszeichen gleiche Merkmale bezeichnen. Im Unterschied zur ersten Ausführungsform ist die anstelle eines diffraktiven optischen Elements 20 eine Linse 26 vor den Empfängern 22, 24 angeordnet. Die Linse 26 fokussiert das Nutzlicht 14b sowie aus der Richtung des Nutzlichts 14b einstrahlendes Störlicht 18 auf den Nutzlichtempfänger 22, der innerhalb des ringförmigen Störlichtempfängers 24 angeordnet ist. Der Störlichtempfänger 24 kann segementiert sein, wie Unterteilungen 24a andeuten. Dies erleichtert die Herstellung der Photodioden für den Störlichtempfänger 24, indem die Segmente zusammengeschaltet werden und daher nicht großflächig oder von komplizierter Form sein müssen.

Auch die Linse 26 mit dem ringförmigen Störlichtempfänger 24 teilt wie bei der ersten Ausführungsform das einfallende Licht in ein Überlagerungssignal aus Nutzlicht 14c und Störlicht 18 einerseits und ein Störlichtsignal andererseits. Abweichend von der ersten Ausführungsform kann der Lichtsender 12 in diesem Fall auch eine breitbandige Lichtquelle wie etwa eine Halogenlampe sein, da die Linse 26 nicht oder jedenfalls kaum wellenlängenabhängig fokussiert.

Es ist denkbar, eine Mischform der beiden beschriebenen Ausführungsformen vorzusehen. Dabei wird dem diffraktiven optischen Element 20 eine Linse zugeordnet, um entweder dem diffraktiven optischen Element 20 vorgeordnet das Nutzlicht 14b vorzufokussieren, also einen zu großen Fangbereich des diffraktiven optischen Elements 20 auszugleichen, oder um das abgelenkte Lichtbündel 14c dem diffraktiven optischen Element 20 nachgeordnet auf den Nutzlichtempfänger 22 zur fokussieren.

Figur 3 zeigt eine Auswertungsschaltung für den Nutzlichtempfänger 22 und den Störlichtempfänger 24. Nutzlichtempfänger 22 und Störlichtempfänger 24 sind antiparallel geschaltet, damit sich gleiche Signalanteile gegenseitig kompensieren. Das entstehende gemeinsame Signal von dem Nutzlichtempfänger 22 und Störlichtempfänger 24 wird einem Verstärker 28 zugeführt. Das über einen Widerstand 30 und Verstärker 28 strom-spannungsgewandelte Ausgangssignal beträgt dann U=R*Überlagerungssignal-Störlichtsignal=R(Störlichtsignal+Nutzlichtsignal-Störlichtsignal)=R*Nutzlichtsignal. Das Vorzeichen der Ausgangspannung U wird durch die Anordnung von Nutzlichtempfänger 22 und Störlichtempfänger 24 bestimmt.

Das Störlichtsignal wird also durch Differenzbildung der optoelektronischen in dem Nutzlichtempfänger 22 und dem Störlichtempfänger 24 erzeugten Photoströme vollständig eliminiert, ohne störende elektronische Bandpassfilter einsetzen zu müssen. Das gilt natürlich nur in dem Idealfall, dass auf die beiden Lichtempfänger 22, 24 auftreffendes Störlicht 18 genau gleich ist. In der Realität verbleibt ein kleiner Unterschied dieses auftreffenden Störlichts 18 als nicht unterdrückte Störkomponente.

Im Ergebnis kann also sowohl im optischen Pfad durch die Kanaltrennung auf einen optischen Bandpassfilter als auch durch die einfache Differenzschaltung auf einen elektronischen Bandpassfilter in der Auswertungsschaltung verzichtet werden.

In beiden beschriebenen Ausführungsformen sind Varianten denkbar. So können Nutzlichtempfänger 22 und Störlichtempfänger 24 flächengleich sein, wie dies für die in Figur 3 dargestellte Auswertungsschaltung vorausgesetzt ist. Alternativ können auch unterschiedlich große Flächen gewählt werden, wobei dann in der Auswertung eine entsprechende Skalierung zum Beispiel durch Widerstände vorgenommen wird, oder wobei die von den Empfängern 22, 24 generierten Photoströme unterschiedlich stark verstärkt werden. Anstelle des in Figur 3 dargestellten Operationsverstärkers 28 kann ein Instrumentierungsverstärker mit zwei getrennten Stromeingängen eingesetzt werden, die jeweils mit den Photoströmen von Nutzlichtempfänger 22 und Störlichtempfänger 24 beaufschlagt werden. Denkbar ist alternativ, zwei getrennte Strom-/Spannungswandler vorzusehen, welche die Photoströme von Nutzlichtempfänger 22 und Störlichtempfänger 24 in eine zugehörige Spannung umsetzen und anschließend eine Differenz mittels eines Differenz- oder Instrumentierungsverstärkers gebildet wird. Schließlich ist auch denkbar, die Photoströme in je einem A/D-Wandler zu digitalisieren und dann in einer Recheneinheit weiterzuverarbeiten.

In den Figuren 1 und 2 ist als Sensor 10 eine einfache Lichtschranke dargestellt, bei welcher der Lichtsender 12 über den Überwachungsbereich 11 zu dem Empfänger 22, 24 strahlt. Alternativ ist aber auch eine Reflexionslichtschranke oder ein Reflexionslichtgitter mit einer einseitigen Anordnung von Sendern und Empfängern denkbar, wobei ein Reflektor am anderen Ende des Überwachungsbereichs 11 aufgestellt ist und der Leuchtfleck des an diesem Reflektor reflektierten Lichtes auf den Nutzlichtempfänger 22 geleitet wird.

In einer Variante der zweiten Ausführungsformen mit einer Linse 26 kann im Nahbereich, also wenn der Lichtsender 12 nahe dem Empfänger 22, 24 angeordnet ist, ein Teil des Nutzlichts 14c im Nahbereich nicht ausschließlich den Nutzlichtempfänger 22, sondern auch auf den Störlichtempfänger 24 treffen. Bei der Kompensation gemäß Figur 3 wird dieser Teil des Nutzlichts von dem Überlagerungssignal abgezogen. Das entstehende Nutzlichtsignal ist also weniger stark. Das kann vorteilhaft sein, um einer erheblichen Überhöhung der Nutzsignalamplitude im Nahbereich entgegenzuwirken. Der Dynamikbereich für das Nutzlichtsignal wird damit im Nahbereich auf wünschenswerte Weise eingeengt.

Die Intensitätsverhältnisse in diesem Fall sind zur Erläuterung in Figur 4 skizzenhaft und qualitativ dargestellt. Darin ist die Intensität gegen die Entfernung L zwischen Lichtsender 12 und Empfänger 22, 24 aufgetragen. Die durchgezogene Linie ist der Intensitätsverlauf des Nutzlichtempfängers 22, die im Nahbereich, also bei kleinen Entfernungen L in der Sättigung liegt und daher konstant bleibt. Mit zunehmender Entfernung sinkt die Intensität dann ab, bis sie im Grundrauschen nicht mehr erkennbar ist. Auf ähnliche Weise wird auch der Störlichtempfänger, dessen Intensitätsverlauf mit einer gepunkteten Linie dargestellt ist, in einem Nahbereich von noch kleineren Entfernungen L in die Sättigung getrieben, da das Nutzlicht dann einen relativ großen Fleck ausleuchtet, der sowohl den inneren Nutzlichtempfänger 22 als auch den umgebenden Störlichtempfänger 24 ausleuchtet und in die Sättigung treibt. Die gestrichelte Linie stellt schließlich die Differenz dieser beiden Intensitäten dar, die als Ausgang der Differenzschaltung zwischen den Empfängern 22, 24 gemäß Figur 3 anliegt. Man erkennt die geringeren Anforderungen an den Dynamikbereich des Verstärkers daran, dass diese gestrichelte Linie nur ein Maximum erreicht, das kleiner ist als das des Intensitätsverlaufs des Nutzlichtempfängers 22 allein.

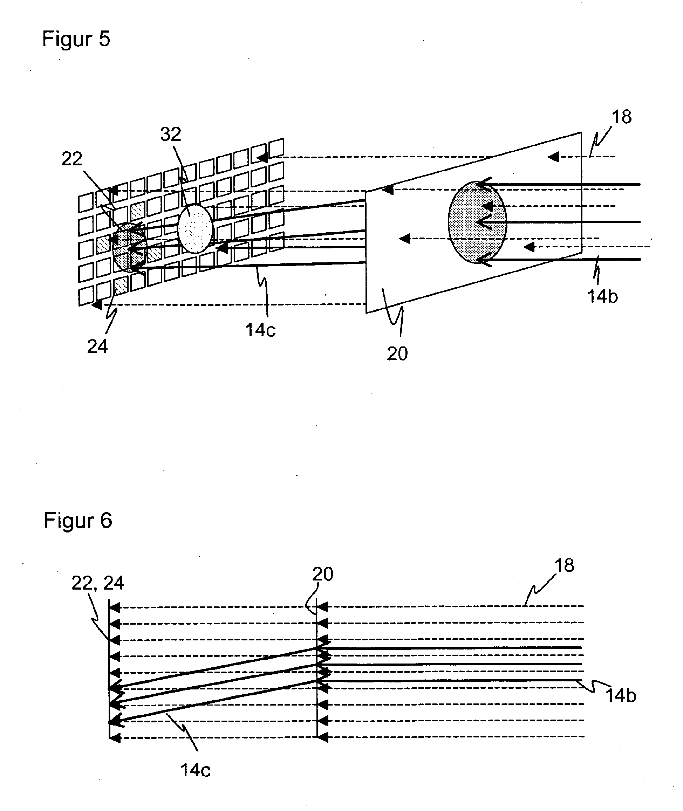

Figur 5 zeigt eine vorteilhafte Weiterbildung der Erfindung. Es ist der Übersicht halber nur die Empfangseite des Sensors 10 dargestellt. Nutzlichtempfänger 22 und Störlichtempfänger 24 sind hier Teil einer Matrix aus lichtempfangenden Pixelelementen. Diese Pixelelemente sind gleichartige Photodioden, die mechanisch nebeneinander angeordnet, elektronisch aber getrennt sind und die für eine gute Übereinstimmung ihrer optoelektronischen Eigenschaften auf einem gemeinsamen Chip mit denselben Prozessschritten hergestellt werden, wie das bei einem gängigen CCD- oder CMOS-Chip der Fall ist. Die Zuordnung, welche dieser Pixelelemente den Nutzlichtempfänger 22 und welche den Störlichtempfänger 24 bilden, erfolgt in einer noch zu beschreibenden Einlernphase, um die Justierung des Sensors 10 zu erleichtern.

Nutzlicht 14 und Störlicht 18 fallen auf das diffraktive optische Element 20. Wie bereits im Zusammenhang mit der ersten Ausführungsform beschrieben, ist das diffraktive optische Element 20 derart ausgebildet, dass Nutzlicht 14 wegen seiner definierten Wellenlänge in einen bestimmten Bereich der Pixelmatrix abgelenkt wird. Diese Ablenkung lässt sich in der Draufsicht der Figur 6 besser erkennen.

Um unvermeidliche Fertigungstoleranzen auszugleichen und um die Justierung des Sensors 10 zu erleichtern, ist eine Einlernphase vorgesehen. Dabei wird der Lichtsender 12 eingeschaltet, und die vom Nutzlicht 14 getroffenen Pixelelemente werden erfasst und ihre Adresse abgespeichert. Die Erfassung kann erfolgen, indem die Photoströme der Pixelelemente digitalisiert werden und dann in einer Recheneinheit identifiziert werden.

Diese Pixelelemente in der Figur 5 sind die vier quadratisch angeordneten Pixelelemente um den grau dargestellten Auftreffbereich des Nutzlichts, werden durch Parallelschalten zusammengefasst und verhalten sich wie eine einheitliche Photodiode, die den Nutzlichtempfänger 22 bildet.

Entsprechend wird eine Anzahl von Pixelelementen selektiert und zusammengefasst, die nicht von Nutzlicht 14 getroffen sind. Das können etwa dem Nutzlichtempfänger 22 benachbart angeordnete Pixelelemente sein, die in Figur 5 schraffiert dargestellt sind. Diese bilden den Störlichtempfänger 24. Es bietet sich an, eine gleiche Anzahl von Pixelelementen auszuwählen, damit Nutzlichtempfänger 22 und Störlichtempfänger 24 gleich groß sind. Alternativ kann aber auch eine unterschiedliche Anzahl von Pixelelementen gewählt werden, und der Flächenunterschied wird dann bei der Auswertung, wie oben beschrieben, kompensiert.

Schließlich ist auch denkbar, nicht benachbarte Pixelelemente auszuwählen. Man könnte beispielsweise daran denken, vier Pixelelemente 32 an dem Ort auszuwählen, an dem das Nutzlicht auftreffen würde, wenn kein diffraktives optisches Element 20 vorhanden wäre.

Obwohl die Ausführungsform gemäß Figur 5 mit einem diffraktiven optischen Element beschrieben wurde, ist alternativ auch der Einsatz einer Linse 26 denkbar. Das Einlernen der Spotlage erfolgt dann ganz analog.

Figur 7 zeigt eine Ausführungsform, bei der das diffraktive optische Element 20 das Nutzlicht 14 nicht in einen Spot, sondern in ein matrixförmiges Muster ablenkt. Der besseren Übersicht halber ist hier kein Störlicht 18 dargestellt. Die Mikrostruktur des diffraktiven optischen Elements 20 kann so ausgelegt werden, dass praktisch beliebige Abbildungsmuster des Nutzlichts 14 auf den Pixelelementen entstehen. Auch die nicht beieinander liegenden vom Nutzlicht 14 getroffenen Pixelelemente können zu dem Nutzlichtempfänger 22 zusammengefasst werden. Alternativ zu der dargestellten matrixförmigen Anordnung kann das diffraktive optische Element 20 eine streifenförmige Verteilung des Nutzlichts 14 erzeugen, wobei beispielsweise jede zweite Zeile der Matrix von Pixelelementen mit Nutzlicht 14 beleuchtet wird. Es sind nahezu beliebige andere sinnvolle Geometrien in der Strahlformung sowie auch der Pixelelemente selber vorstellbar, etwa ein Kreis in einem Kreisring, mehrere ineinander liegende Kreisen, von denen nur einer oder nur einige von dem Nutzlicht 14 getroffen werden, Hexagons, Trapeze und dergleichen, wobei die Pixelelemente wie auch die entstehenden von dem Nutzlicht 14 ausgeleuchteten Bereiche unterschiedlich groß sein können.

Es ist natürlich auch denkbar, solche Muster nicht auf eine Matrix von Pixelelementen, sondern eigens dem Muster entsprechend geformten Photodioden abzubilden. Der Einlernmodus zur einfachen Justage ist dann aber nicht möglich.

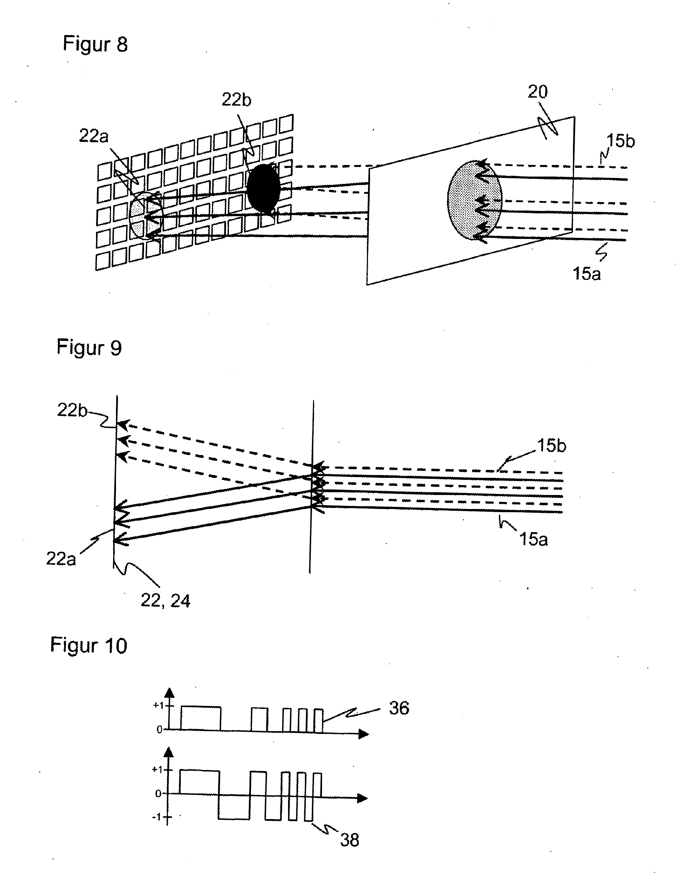

Figur 8 zeigt eine weitere vorteilhafte Weiterbildung der Erfindung. Erneut ist Störlicht 18 nicht dargestellt, um die Übersicht zu erhalten. Bei dieser Weiterbildung sind zwei Lichtsender 12 mit verschiedenen optischen Wellenlängen- bzw. Frequenzbereichen vorgesehen, oder der Lichtsender 12 ist in der Lage, Licht in zwei verschiedenen optischer Frequenzbereichen zu erzeugen. Das diffraktive optische Element 20 ist nun mit einer Mikrostruktur versehen, die Nutzlicht 15a des ersten Frequenzbereichs in der bereits mehrfach beschriebenen Weise auf Pixelelemente eines Teil-Nutzlichtempfängers 22a lenkt. Die Mikrostruktur ist aber weiter derart ausgebildet, das Nutzlicht 15b des zweiten Frequenzbereichs in einer anderen Richtung abgelenkt wird, nämlich auf Pixelelemente eines Teil-Nutzlichtempfängers 22b. Die Ablenkung durch das diffraktive optische Element 20, die Nutzlicht 15a des ersten Frequenzbereichs des in eine andere Richtung ablenkt als Nutzlicht 15b des zweiten Frequenzbereichs, ist in der Draufsicht der Figur 9 besser zu erkennen.

Die beiden Teil-Nutzlichtempfänger 22a, 22b bilden gemeinsam den Nutzlichtempfänger 22. Die Lage der den Nutzlichtempfänger 22 bildenden Pixelelemente kann wie oben beschrieben eingelernt werden. Die auf die beiden Teil-Nutzlichtempfänger22a, 22b auftreffenden Lichtsignale werden nun mit einem unterschiedlichen Vorzeichen bewertet.

Der Vorteil dieser Ausführungsform soll mithilfe der Figur 10 erläutert werden. Das obere System zeigt eine gegen die Zeit aufgetragene unipolare Intensitätsverteilung 36 mit einer Signalkodierung, wie sie üblicherweise von einer Photodiode empfangen wird. Das untere System zeigt dagegen ein bipolares Signal 38. Das bipolare Signal 38 lässt sich ohne die erfindungsgemäße Anordnung mit Licht nicht erzeugen, da es kein negatives Lichtsignal gibt. Erfindungsgemäß ist es möglich, ein bipolares Signal dadurch zu erzeugen, dass alternierend Licht des ersten und des zweiten Frequenzbereichs ausgesandt wird, das dann jeweils mit unterschiedlichem Vorzeichen bewertet wird (also etwa Licht des ersten Frequenzbereichs für die Codierung einer "+1" und Licht des zweiten Frequenzbereichs für die Codierung einer "-1").

Eine Alternative zu dem unipolaren Signal 36 ist aus mehreren Gründen wünschenswert. Um üblicherweise verwendete Signalcodes auszuwerten, müssen hochfrequente Signale verstärkt werden. Das gelingt einigermaßen verzerrungsfrei nur mit einem hochwertigen, schnellen DC-Verstärker, der entsprechend teuer ist. Alternativ können Koppelkondensatoren eingesetzt werden. Diese entladen nur mit einer endlichen Zeitkonstante und verzerren dadurch das Signal. Ein unipolares Signal kann die Umladungsvorgänge nicht schnell und verzerrungsfrei genug auslösen. Außerdem verbleiben bei einem unipolaren Signal am Ende einer Signalfolge noch Residuen ("Restoffset") in der Auswertungsschaltung bzw. dem Verstärker, die bei einer noch während dieser Abklingzeit eintreffenden weiteren Signalfolge, Verzerrungen verursachen. Das System enthält somit störende Schwebungen.

Das bipolare Signal hat nun den Vorteil, "DC-frei", also symmetrisch zur Nulllinie zu sein. Insbesondere ist es damit bei Start und Ende einer Signalfolge Null, es gibt also keinen Restoffset wie bei einem unipolaren Signal. Die Idee, durch Neubewertung und Verschiebung um die halbe Maximalamplitude nach unten das unipolare Signal zu symmetrisieren, scheitert daran, dass diese Maximalamplitude nicht bekannt ist und auch in Echtzeit nicht ermittelt werden kann.

Ein zweiter Vorteil neben der Verhinderung von Schwebungen und dadurch verursachten Verzerrungen ist, dass die Signalfolgen zumeist durch Korrelation digital ausgewertet werden. Ist das Signal nicht symmetrisch zu Nulllinie, entstehen in der Korrelationsfunktion hohe Absolutwerte durch den für die Auswertung eigentlich irrelevanten, aber in den zu korrelierenden Signalen gleichermaßen vorhandenen Offset. Die digitale Auswertung muss also unnötig mit großen Zahlenwerten rechnen, was entsprechende Bitlängen erfordert, obwohl ein großer Teil dieser Bits dann nicht für einen relevanten Korrelationswert, sondern nur den irrelevanten gleichen Offset codiert.

Schließlich ist auch ein positiver Nachweis eines alternierend positiv und negativ bewerteten Signalanteils des bipolaren Signals ("+1" und "-1") sicherer zu detektieren als ein alternierend ein- und ausgeschaltetes unipolares Signal ("1" und "0").

Sofern zwei Lichtquellen vorgesehen sind, kann in dieser Ausführungsform auch ein Differenzsignal erzeugt werden. Dann wird das Signal in üblicher Weise in beiden Frequenzbereichen ausgesandt und dann durch die unterschiedliche Vorzeichenbewertung die Erkennungsgenauigkeit verbessert, weil das Signal als Differenz, also nicht gegen "0", sondern das positive gegen das negative Signal ausgewertet wird. Diese Differenz kann wegen unterschiedlicher Empfindlichkeit der Empfänger 22, 24 gegen die beiden Frequenzbereiche asymmetrisch zur Nulllinie liegen, also um einen Offset verschoben sein. Dies kann in einem Einlernvorgang gemerkt und später bei der Auswertung berücksichtigt oder durch Anpassung der Sendeleistungen der beiden Lichtquellen 12 ausgeglichen werden. Ist der Offset besonders groß, kann daran auch der Ausfall einer der beiden Lichtquellen 12 festgestellt werden.

## Patentansprüche

1. Optoelektronischer Sensor (10), insbesondere Lichtgitter oder Lichtschranke mit mindestens einem ersten Lichtsender (12), der Nutzlicht (14) eines ersten vorgegebenen optischen Frequenzbereichs aussenden kann, sowie mit mindestens zwei Lichtempfängern (22, 24), wobei der Sensor (10) ein optisches Element (20, 26) aufweist, das einfallendes Nutzlicht (14) auf einen Nutzlichtempfänger (22) der beiden Lichtempfänger (22, 24) leiten kann, so dass im Betrieb eine Überlagerung aus Störlicht (18) und Nutzlicht (14) auf den Nutzlichtempfänger (22) und Störlicht auf einen Störlichtempfänger (24) als den anderen der beiden Lichtempfänger (22, 24) fällt und dort als jeweiliges Ausgangssignal ein Überlagerunssignal bzw. ein Störlichtsignal erzeugt, **dadurch gekennzeichnet, dass** im Sensor eine Auswertungseinheit vorgesehen ist, die dafür ausgebildet ist, das Nutzlichtsignal durch einen Vergleich des Störlichtsignals mit dem Überlagerungssignal von dem Störlichtsignal zu befreien, dass das optische Element ein diffraktives optisches Element (20) ist, welches eine Mikrostruktur aufweist, mittels dessen Nutzlicht selektiv ablenkbar und die für Störlicht diffus transparent ist, dass eine Vielzahl von lichtempfangenden Pixelelementen vorgesehen sind, wobei eine erste Teilmenge der Vielzahl den Nutzlichtempfänger (22) und eine hierzu disjunkte zweite Teilmenge der Vielzahl den Störlichtempfänger (24) bildet, und dass im Sensor eine Einlerneinheit vorgesehen ist, welche in einem Einlernmodus Nutzlicht (14) empfangende Pixelelemente erkennen kann und durch Zusammenfassen dieser Pixelelemente die erste Teilmenge festlegt, die den Nutzlichtempfänger (22) bildet.

2. Sensor (10) nach Anspruch 1, **dadurch gekennzeichnet, dass** das diffraktive optische Element (20) das Nutzlicht (14) in einem Muster, insbesondere einem Spot, einer Matrixanordnung, einer Vielzahl von Spots oder einem Streifenmuster abbildet.

3. Sensor (10) nach Anspruch 1 oder 2, **dadurch gekennzeichnet, dass** das optische Element eine hintereinander angeordnete Kombination aus einer Linse (26) und einem diffraktiven optischen Element (20) ist.

4. Sensor (10) nach einem der vorhergehenden Ansprüche, **dadurch gekennzeichnet, dass** der erste Lichtsender (12) oder ein zweiter Lichtsender Nutzlicht (15b) eines zweiten vorgegebenen optischen Frequenzbereichs aussenden kann, der Nutzlichtempfänger (22) einen ersten Bipolarsignal-Empfangsbereich (22a) und einen zweiten Bipolarsignal-Empfangsbereich (22b) aufweist, das diffraktive optische Element (20) dafür ausgebildet ist, einfallendes Nutzlicht (15a) des ersten Frequenzbereichs auf den ersten Empfangsbereich (22a) und einfallendes Nutzlicht (15b) des zweiten Frequenzbereich auf den zweiten Empfangsbereich (22b) zu leiten und somit der erste Empfangsbereich (22a) und der zweite Empfangsbereich (22b) durch entsprechende Bewertung ihrer Ausgangssignale ein bipolares Überlagerungssignal liefern.

5. Sensor (10) nach einem der vorhergehenden Ansprüche, **dadurch gekennzeichnet, dass** die Vielzahl von lichtempfangenden Pixelelementen in einer Zeile oder einer Matrix angeordnet sind und dass die zweite Teilmenge eine gleiche Zahl der Elemente wie die erste Teilmenge aufweist.

6. Sensor (10) nach einem der vorhergehenden Ansprüche, **dadurch gekennzeichnet, dass** die Einlerneinheit weiter dafür ausgebildet ist, die zweite Teilmenge im Einlernmodus durch Nachbarschaft zu den Nutzlicht empfangenden Pixelelementen festzulegen.

7. Sensor (10) nach einem der vorhergehenden Ansprüche, wobei die Pixelelemente der ersten Teilmenge untereinander und die Pixelelemente der zweiten Teilmenge untereinander parallel geschaltet sind, um den Nutzlichtempfänger (22) bzw. den Störlichtempfänger (24) zu bilden.

8. Sensor (10) nach Anspruch 4, **dadurch gekennzeichnet, dass** die erste Teilmenge eine erste Untermenge als ersten Bipolar-Empfangsbereich (22a) und eine zweite Untermenge als zweiten Bipolar-Empfangsbereich (22b) aufweist.

9. Sensor (10) nach Anspruch 2, **dadurch gekennzeichnet, dass** die Größe und/oder die Anordnung der Pixelelemente an das Muster angepasst ist.

10. Sensor (10) nach einem der vorhergehenden Ansprüche, **dadurch gekennzeichnet, dass** ein Verstärker (28) mit zwei getrennten Stromeingängen mit den Lichtempfängern (22, 24) verbunden ist, um das Überlagerungssignal und das Störlichtsignal auszuwerten.

11. Empfangsverfahren für ein Nutzlichtsignal eines ersten vorgegebenen optischen Frequenzbereichs, wobei über ein optisches Element (20) Störlicht sowie eine Überlagerung aus Nutzlicht und Störlicht empfangen und in ein Störlichtsignal sowie ein Überlagerungssignal aus dem Nutzlichtsignal und einem Störlichtsignal umgewandelt wird, **dadurch gekennzeichnet, dass** das Störlichtsignal mit dem Überlagerungssignal verglichen wird, um das Nutzlichtsignal zu erhalten, das das optische Element ein diffraktives optisches Element (20) ist, welches eine Mikrostruktur aufweist, mittels derer Nutzlicht selektiv abgelenkt wird und die für Störlicht diffus transparent ist, dass eine Zeile oder eine Matrix aus einer Vielzahl von lichtempfangenden Pixelelementen vorgesehen ist, wobei das Überlagerungssignal mit einer ersten Teilmenge der Pixelelemente und das Störlichtsignal mit einer zweiten Teilmenge der Pixelelemente empfangen wird, indem in einem Einlernmodus Nutzlicht (14) empfangende Pixelelemente erkannt werden und durch Zusammenfassen dieser Pixelelemente die erste Teilmenge festgelegt wird.

12. Verfahren nach Anspruch 11, **dadurch gekennzeichnet, dass** das Nutzlichtsignal von dem diffraktiven optischen Element (20) zu einem Spot, einer Matrixanordnung, einer Vielzahl von Spots oder einem Streifenmuster abgebildet wird.

13. Verfahren nach Anspruch 11 oder 12, **dadurch gekennzeichnet, dass** durch Zusammenfassen ausgewählter, zu den Nutzlicht (14) empfangenden Pixelelementen benachbarten Pixelelementen die zweite Teilmenge festgelegt wird.

14. Verfahren nach einem der Ansprüche 11 bis 13, **dadurch gekennzeichnet, dass** ein Nutzlichtsignal eines zweiten vorgegebenen optischen Frequenzbereichs vorgesehen ist, wobei die Nutzlichtsignale von dem diffraktiven optischen Element (20) in unterschiedlicher Weise abgelenkt werden, so dass das Nutzlichtsignal des ersten Frequenzbereichs getrennt von dem Nutzlichtsignal des zweiten Frequenzbereichs empfangen wird, und wobei das Nutzlichtsignal des ersten Frequenzbereichs und das Nutzlichtsignal des zweiten Frequenzbereichs als bipolares Signal (38) bewertet werden.

## Claims

1. An optoelectronic sensor (10), in particular a light grid or a light barrier, comprising at least a first light transmitter (12), which can emit operating light (14) of a first preset optical frequency range, as well as at least two light receivers (22,24), wherein the sensor (10) has an optical element (20, 26) which can guide incident operating light (14) onto an operating light receiver (22) of the two light receivers (22, 24), so that during operation a superposition of interfering light (18) and operating light (14) is incident on the operating light receiver (22) and interfering light is incident on an interfering light receiver (24) as the other of the two light receivers (22, 24) and there respectively generates a superposition signal and an interfering light signal as a respective output signal, **characterized in that** an evaluation unit is provided in the sensor (10) which is adapted to free the operating light signal from the interfering light signal through a comparison between the interfering light signal and the superposition signal, **in that** the optical element is a diffractive optical element (20) comprising a microstructure by means of which operating light is selectively deflectable and which is diffusely transparent for interfering light, **in that** a plurality of light receiving pixel elements is provided, wherein a first subset of the plurality of the operating light receivers (22) and a second subset disjoint to the first subset of the plurality forms the interfering light receiver (24), and **in that** a teaching unit is provided, which in a teaching mode can detect operating light (14) receiving pixel elements and through the combination of these pixel elements determines the first subset which forms the operating light receiver (22).

2. A sensor (10) in accordance with claim 1, **characterized in that** the diffractive optical element (20) images the operating light (14) in a pattern, in particular a spot, a matrix arrangement, a plurality of spots or a strip pattern.

3. A sensor (10) in accordance with claim 1 or 2, **characterized in that** the optical element is a combination of a lens (26) and a diffractive optical element (20) arranged in series.

4. A sensor (10) in accordance with any one of the preceding claims, **characterized in that** the first light transmitter (12) or a second light transmitter can emit operating light (15b) of a second preset optical frequency range, the operating light receiver (22) includes a first bipolar signal receiving region (22a) and a second bipolar signal receiving region (22b), the diffractive optical element (20) is adapted to guide incident operating light (15a) of the first frequency range to the first receiving region (22a) and to guide incident operating light (15b) of the second frequency range to the second receiving region (22b) and thus the first receiving region (22a) and the second receiving region (22b) provide a bipolar superposition signal through a corresponding evaluation of their output signals.

5. A sensor (10) in accordance with any one of the preceding claims, **characterized in that** the plurality of light receiving pixel elements is arranged in a line or in a matrix and **in that** the number of elements of the first subset and the second subset are the same.

6. A sensor (10) in accordance with claim any of the preceding claims, **characterized in that** the teaching unit is further adapted to determine the second subset in teaching mode through the neighbourship to the operating light receiving pixel elements.

7. A sensor (10) in accordance with any of the preceding claims, wherein the pixel elements of the first subset are switched in parallel among each other and the pixel elements of the second subset are switched in parallel among each other to form the operating light receiver (22) and the interfering light receiver (24), respectively.

8. A sensor (10) in accordance with claim 4, **characterized in that** the first subset includes a first partial set as the first bipolar receiving region (22a) and a second partial set as the second bipolar receiving region (22b).

9. A sensor (10) in accordance with claim 2, **characterized in that** the size and/or the arrangement of the pixel elements is matched to the pattern.

10. A sensor (10) in accordance with any one of the preceding claims, **characterized in that** an amplifier (28) with two separated current inputs is connected to the light receivers (22, 24) to evaluate the superposition signal and the interfering light signal.

11. A receiving method for an operating light signal of a first preset optical frequency range wherein, by means of an optical element (20), interfering light as well as a superposition of operating light and interfering light is received and is converted to an interfering light signal as well as a superposition signal of the operating light signal and an interfering light signal, **characterized in that** the interfering light signal is compared to the superposition signal to obtain the operating light signal, **in that** the optical element is a diffractive optical element (20) comprising a microstructure by means of which operating light is selectively deflected and which is diffusely transparent for interfering light, **in that** a line or a matrix comprising a plurality of light receiving pixel elements is provided, wherein the superposition signal is received by a first subset of the pixel elements and the interfering light signal is received by a second subset of the pixel elements by recognising pixel elements receiving operating light in a teaching mode and by determining the first subset through the combination of these pixel elements.

12. A method in accordance with claim 11, **characterized in that** the operating light signal is imaged by the diffractive optical element (20) to a spot, to a matrix arrangement, to a plurality of spots or to a strip pattern.

13. A method in accordance with claim 11 or 12, **characterized in that** through the combination of selected pixel elements neighbouring the pixel elements receiving operating light the second subset is determined.

14. A method in accordance with any one of claims 11 to 13, **characterized in that** an operating light signal of a second preset optical frequency range is provided, wherein the operating light signals are deflected in different ways by the diffractive optical element (20), so that the operating light signal of the first frequency range is detected separate from the operating light signal of the second frequency range and wherein the operating light signal of the first frequency range and the operating signal of the second frequency range are evaluated as a bipolar signal (38).

## Revendications

1. Capteur (10) optoélectronique, en particulier grille lumineuse ou barrière lumineuse comprenant au moins un premier émetteur de lumière (12), qui peut émettre de la lumière utile (14) d'une première plage de fréquences optique prédéfinie, et au moins deux récepteurs de lumière (22, 24), le capteur (10) présentant un élément (20, 26) optique, qui peut diriger de la lumière utile (14) incidente sur un récepteur de lumière utile (22) des deux récepteurs de lumière (22, 24), de sorte que, en service, une superposition de lumière parasite (18) et de lumière utile (14) tombe sur le récepteur de lumière utile (22) et de la lumière parasite tombe sur un récepteur de lumière parasite (24) en tant que l'autre des deux récepteurs de lumière (22, 24) et génère ici comme signal de sortie respectif un signal de superposition ou un signal de lumière parasite, **caractérisé en ce qu'**il est prévu dans le capteur une unité d'analyse qui est conçue pour libérer le signal de lumière utile du signal de lumière parasite par une comparaison du signal de lumière parasite avec le signal de superposition, **en ce que** l'élément optique présente un élément (20) optique diffractif qui présente une microstructure, au moyen de laquelle de la lumière utile peut être déviée de façon sélective et qui est transparente de façon diffuse pour de la lumière parasite, **en ce qu'**une pluralité d'éléments pixels recevant la lumière est prévue, une première quantité partielle de la pluralité formant le récepteur de lumière utile (22) et une seconde quantité partielle, disjointe par rapport à la première, de la pluralité formant le récepteur de lumière parasite (24) et **en ce qu'**il est prévu dans le capteur une unité d'apprentissage qui peut détecter des éléments pixels recevant de la lumière optique (14) dans un mode d'apprentissage et définit par regroupement de ces éléments pixels la première quantité partielle qui forme le récepteur de lumière utile (22).

2. Capteur (10) selon la revendication 1,
**caractérisé en ce que** l'élément (20) optique diffractif reproduit la lumière utile (14) dans un modèle, en particulier un spot, un agencement de matrice, une pluralité de spots ou un modèle à bandes.

3. Capteur (10) selon la revendication 1 ou 2,
**caractérisé en ce que** l'élément optique est une combinaison constituée d'une lentille (26) et d'un élément (20) optique diffractif disposés l'un derrière l'autre.

4. Capteur (10) selon l'une quelconque des revendications précédentes, **caractérisé en ce que** le premier émetteur de lumière (12) ou un second émetteur de lumière peut envoyer de la lumière utile (15b) d'une seconde plage de fréquences optique prédéfinie, lequel récepteur de lumière utile (22) présente une première plage de réception de signaux bipolaires (22a) et une seconde plage de réception de signaux bipolaires (22b), l'élément (20) optique diffractif est conçu pour diriger de la lumière utile (15a) incidente de la première plage de fréquences sur la première plage de réception (22a) et de la lumière utile (15b) incidente de la seconde plage de fréquences sur la seconde plage de réception (22b) et ainsi la première plage de réception (22a) et la seconde plage de réception (22b) fournissent un signal de superposition bipolaire par une évaluation appropriée de leurs signaux de sortie.

5. Capteur (10) selon l'une quelconque des revendications précédentes, **caractérisé en ce que** la pluralité d'éléments pixels récepteurs de lumière est disposée dans une ligne ou une matrice et **en ce que** la seconde quantité partielle présente une même quantité d'éléments que la première quantité partielle.

6. Capteur (10) selon l'une quelconque des revendications précédentes, **caractérisé en ce que** l'unité d'apprentissage est conçue également pour définir la seconde quantité partielle en mode d'apprentissage par proximité avec les éléments pixels recevant de la lumière utile.

7. Capteur (10) selon l'une quelconque des revendications précédentes, les éléments pixels de la première quantité partielle et les éléments pixels de la seconde quantité partielle étant commutés respectivement parallèlement entre eux, afin de former le récepteur de lumière utile (22) et le récepteur de lumière parasite (24).

8. Capteur (10) selon la revendication 4,
**caractérisé en ce que** la première quantité partielle présente une première sous-quantité sous forme de première plage de réception bipolaire (22a) et une seconde quantité sous forme de seconde plage de réception bipolaire (22b).

9. Capteur (10) selon la revendication 2,
**caractérisé en ce que** la grandeur et/ou l'agencement des éléments pixels est/sont adapté(s) au modèle.

10. Capteur (10) selon l'une quelconque des revendications précédentes, **caractérisé en ce qu'**un amplificateur (28) avec deux entrées de courant séparées est relié aux récepteurs de lumière (22, 24), afin d'analyser le signal de superposition et le signal de lumière parasite.

11. Procédé de réception pour un signal de lumière utile d'une première plage de fréquences optique prédéfinie, de la lumière parasite et une superposition de lumière utile et de lumière parasite étant reçues par un élément (20) optique et étant transformées en un signal de lumière parasite et un signal de superposition constitué du signal de lumière utile et d'un signal de lumière parasite, **caractérisé en ce que** le signal de lumière parasite est comparé avec un signal de superposition, afin d'obtenir un signal de lumière utile, **en ce que** l'élément optique est un élément (20) optique diffractif, qui présente une microstructure, au moyen de laquelle de la lumière utile est déviée et qui est transparente de façon diffuse pour de la lumière parasite, **en ce qu'**une ligne ou une matrice constituée d'une pluralité d'éléments pixels recevant de la lumière est prévue, le signal de superposition étant reçu avec une première quantité partielle des éléments pixels et le signal de lumière parasite avec une seconde quantité partielle des éléments pixels du fait que des éléments pixels recevant de la lumière utile (14) sont détectés dans un mode d'apprentissage et la première quantité partielle est définie par regroupement de ces éléments pixels.

12. Procédé selon la revendication 11, **caractérisé en ce que** le signal de lumière utile est reproduit par l'élément (20) optique diffractif en un spot, un agencement de matrice, une pluralité de spots ou un modèle à bandes.

13. Procédé selon la revendication 11 ou 12,
**caractérisé en ce que** la seconde quantité partielle est définie par regroupement d'éléments pixels sélectionnés, voisins des éléments pixels recevant de la lumière utile (14).

14. Procédé selon l'une quelconque des revendications 11 à 13, **caractérisé en ce qu'**un signal de lumière utile d'une seconde plage de fréquences optique prédéfinie est prévu, les signaux de lumière utile étant déviés par l'élément (20) optique diffractif de façon différente, de sorte que le signal de lumière utile de la première plage de fréquences est reçu séparément du signal de lumière utile de la seconde plage de fréquences, et le signal de lumière utile de la première plage de fréquences et le signal de lumière utile de la seconde plage de fréquences étant évalués comme signal (38) bipolaire.
